# EUROPÄISCHE PATENTSCHRIFT

(11) **EP 3 265 287 B1**
(45) Veröffentlichungstag und Bekanntmachung des Hinweises auf die Patenterteilung: **07.04.2021**
(21) Anmeldenummer: 16707040.8
(22) Anmeldetag: 24.02.2016
(51) Int. Cl.: B29C 33/00, B29C 37/02, B29C 44/40, B29C 44/56, B29C 44/58

(54) **SCHÄUMSTANZWERKZEUG UND VERFAHREN ZUR HERSTELLUNG VON SCHAUMTEILEN**
FOAMING AND PUNCHING TOOL AND METHOD FOR PRODUCING FOAMED PRODUCTS
OUTIL DE DÉCOUPAGE/EXPANSION ET PROCÉDÉ DE FABRICATION DE PIÈCES EN MOUSSE

(30) Priorität: 02.03.2015 DE 102015203662
(43) Veröffentlichungstag der Anmeldung: 10.01.2018
(73) Patentinhaber: Polytec Car Styling Hörsching GmbH, 4063 Hörsching (AT)
(72) Erfinder: FÜRST, Gerhard, 4224 Wartberg (AT)
(74) Vertreter: dompatent von Kreisler Selting Werner - Partnerschaft von Patent- und Rechtsanwälten mbB
(86) Internationale Anmeldenummer: PCT/EP2016/053823
(87) Internationale Veröffentlichungsnummer: WO 2016/139091

(56) Entgegenhaltungen:
- DE-U1- 29 714 659
- JP-A- 2009 166 321
- JP-A- 2011 218 798
- JP-U- S6 440 614

## Beschreibung

Gegenstand der Erfindung ist ein Schäumstanzwerkzeug zur Herstellung von Schaumteilen aus Integralschaum sowie ein entsprechendes Verfahren zur Herstellung der Schaumteile.

DE 2 116 691 A beschreibt ein Verfahren zur Herstellung von elastischen, verdichteten Polyurethanschaumstoffen. Bei diskontinuierlicher Verfahrensweise wird das hier beschriebene Verfahren so durchgeführt, dass man das verschäumbare Polyurethangemisch in einem gewöhnlichen Formwerkzeug, beispielsweise einer Schachtel verschäumt, nach dem Ablauf der Crush-Time unter Aufrechterhaltung der vorgenannten Temperaturbereiche das Formwerkzeug von der teilweise gehärteten Schaummasse entfernt und die Schaummasse verdichtet. Vorzugsweise wird das Formwerkzeug, in das das verschäumbare Polyurethangemisch eingespeist wird, so dimensioniert, dass der fertige Polyurethanschaumstoff in dieser Form oder nach einem Schneidvorgang zur Entfernung der Haut, die sich im allgemeinen an den Trennkanten des Formkörpers bildet, verwendet werden kann.

DE 26 09 373 A1 betrifft eine Form zur Herstellung von Formköpern aus Integralschaum. Hier wird ein Formkörper aus Integralschaum oder ähnlich verarbeitbaren Kunstoffschäumen beschrieben, wobei die Form aus zwei oder mehreren Formteilen besteht und die Ränder der Formteile fugendicht aneinandergepresst sind. Hier soll eine Form geschaffen werden, bei der eine optimale Entlüftung erhalten wird und bei der gleichzeitig der Formkörper ohne Austriebsgrate hergestellt werden kann, ohne dass dabei die Gefahr einer unvollständigen Formausfüllung eintritt. Dies soll dadurch erreicht werden, dass bei der hier definierten Form die Auflageflächen der Fugen durchlaufend möglichst schmal gestaltet und den Fugen Steuerelemente für den vorbestimmten Fugenabstand zugeordnet sind.

Durch einen geringen einstellbaren Fugenabstand wird zunächst sichergestellt, dass nur ein verhältnismäßig kleiner Teil der Reaktionsmasse durch die Fugen aus dem Formholraum nach außen gelangt. Durch die schmalen Auflageflächen der Fuge ist es darüber hinaus möglich, unmittelbar nach dem Ausschäumungsvorgang die Form sehr fest zu schließen. Infolge der schmalen Auflagefläche ist bei dem üblichen Schließdrücken ein so hoher spezifischer Druck erreichbar, dass der Austrieb unmittelbar am Formrand abgequetscht wird.

DE 297 14 659 U1 **offenbart ein Schäumstanzwerkzeug zur Herstellung von Schaumteilen aus Integralschaum mit einer unteren Formhälfte und einer oberen Formhälfte.**

Bei der Herstellung von Formteilen aus PU-Integralschaum oder ähnlichen Schäumen lässt sich durch das Aufschäumen des Materials nicht vermeiden, dass das Reaktionsgemisch durch die Fugen des Werkzeuges hindurchtritt und somit eine aufwendige Nacharbeit nach dem Entformen erforderlich ist. Andererseits ist ein solcher Austritt gewünscht, um sicherzustellen, dass Lufteinschlüsse im Formteil vermieden werden.

Dementsprechend ist es Aufgabe der vorliegenden Erfindung eine Form zur Verfügung zu stellen, die eine zusätzliche Nacharbeit durch manuelles oder maschinelles Beschneiden oder Befräsen nicht mehr erforderlich macht.

Die vorgenannte Aufgabe wird in einer ersten Ausführungsform gelöst durch ein Schäumstanzwerkzeug **mit Abstandshaltern 5, 5a** zur Herstellung von Schaumteilen 4 aus Integralschaum mit einer unteren Formhälfte 1 und einem an seiner Oberseite befindlichen randumlaufenden Aufsatz 2, der mit der unteren Formhälfte 1 eine zum Formhohlraum gerichtete Nut 3 bildet und einer oberen Formhälfte 6, wobei die obere Formhälfte 6 in einem ersten geschlossenen Zustand bedingt durch Abstandshalter 5 nur soweit in den Formhohlraum eintaucht, dass die Nut 3 aufschäumendes Material 4 aufnehmen kann, und die obere Formhälfte 6 in einem zweiten geschlossenen Zustand nach Entfernen der Abstandshalter 5 und gegebenenfalls Ersetzen derselben durch flachere Abstandshalter 5a tiefer in den Formhohlraum eindringt und auf dem Weg in diesen Zustand in der Nut 3 befindliches Material 4 durch Stanzen entfernen kann.

Durch den geringen Abstand der beiden Formhälften 1, 6 in Schäumstellung kann ein geringer Teil des Reaktionsgemisches 4 durch die Fuge in eine dafür vorgesehene Entlüftungsnut 3 eindringen und ein luftblasenfreies Teil produziert werden.

Damit die beiden Formhälften 1, 6 beim Schließen des Werkzeuges nicht zur Gänze zusammenfahren, werden insbesondere pneumatisch Abstandshalter 5, 5a zwischen die beiden Formhälften 1, 6 eingeschoben. Nach der Aushärtung des Formkörpers 4 im Schäum-Stanzwerkzeug werden die Abstandshalter 5 aus dem Werkzeug entfernt und die beiden Formhälften 1, 6 zusammen gedrückt. Hierbei wird der Austritt durch einen oder mehrere Überfahrschritte der beiden Formhälften 1, 6 abgestanzt. Da das Formmaterial 4 weich ist und komprimiert werden kann, ist dieser Stanzhub mit einer relativ geringen Krafteinwirkung möglich. Wenn der Stanzhub ausgeführt ist, wird das Werkzeug geöffnet und das Formteil 4 entnommen. Dieses kann dann ohne Nacharbeit den weiteren Prozessen zugeführt werden.

Gegenüber derzeit bekannten Werkzeugtechnologien besteht ein besonderer Vorteil der vorliegenden Erfindung darin, dass keine aufwendige Steuerung des Werkzeugs durch unterschiedliches Steigen der Reaktionsmasse notwendig ist. Mit Hilfe der vorliegenden Erfindung werden durch das Verdrängen und anschließende Verdichten der Reaktionsmasse die Werkzeugtrennungen nicht verschmutzt, wodurch eine Reinigung nicht erforderlich ist. Ein weiterer Vorteil der vorliegenden Erfindung besteht darin, dass durch den Überfahrschritt exakt gestanzte Kanten am Formteil 4 erhalten werden. So ist keine Nacharbeitung am Formteil 4 erforderlich. Auch die Gestaltung des Werkzeugs ist relativ einfach. Der Austrieb wird gestanzt und nicht gequetscht.

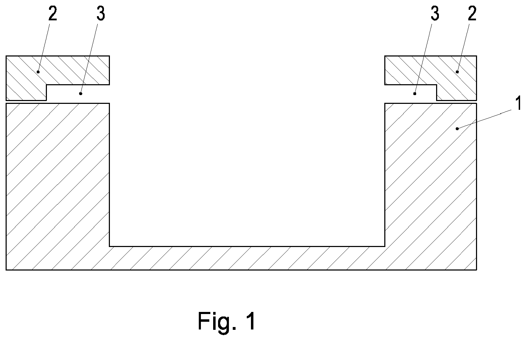

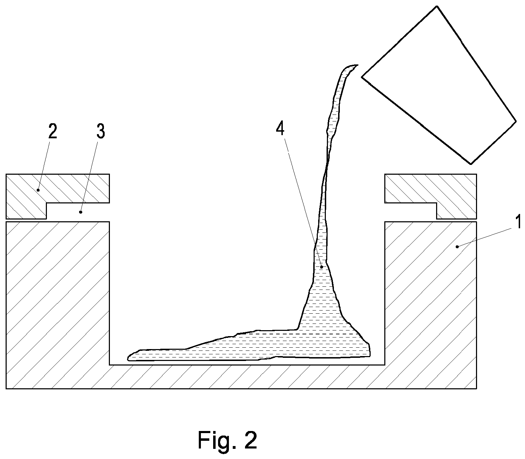

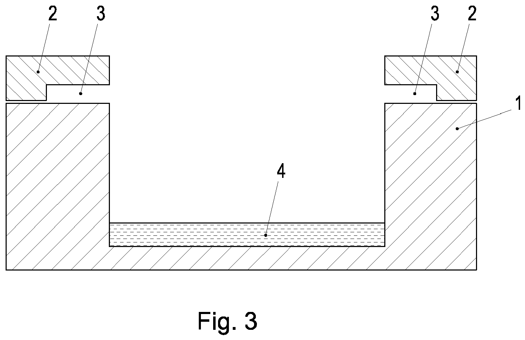

In der Fig. 1 wird die untere Formhälfte 1 mit einem hier rechteckig dargestellten Formholraum dargestellt. Der Aufsatz 2 befindet sich randumlaufend auf der unteren Formhälfte 1 und bildet eine Nut 3 auf dem oberen Rand der unteren Formhälfte 1. In der Fig. 2 wird die untere Formhälfte 1 mit dem Aufsatz 2 beschrieben und das schäumbare Material eingefüllt. In dem Formholraum wird eine definierte Menge eines schäumbaren Materials 4 eingefüllt und verteilt sich, wie in der Fig. 3 dargestellt zunächst am Boden des Formholraums.

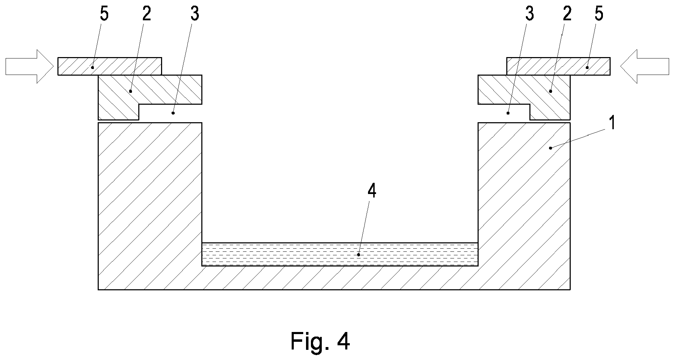

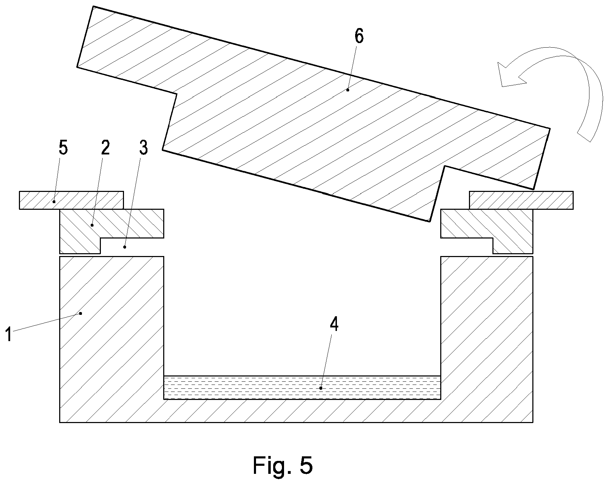

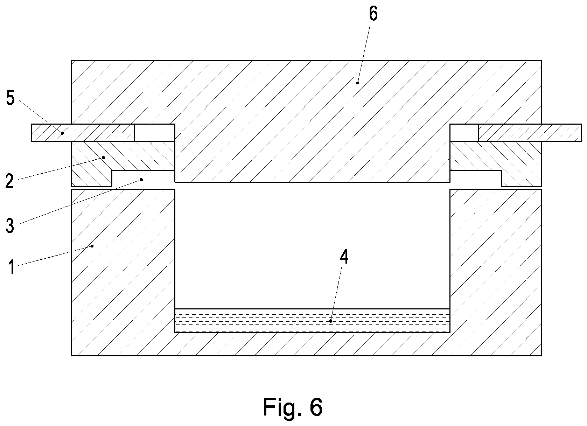

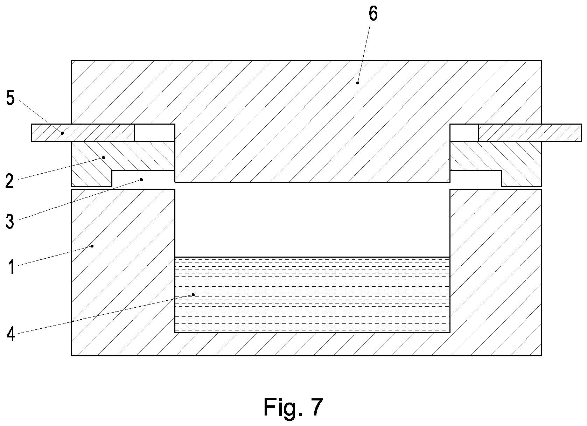

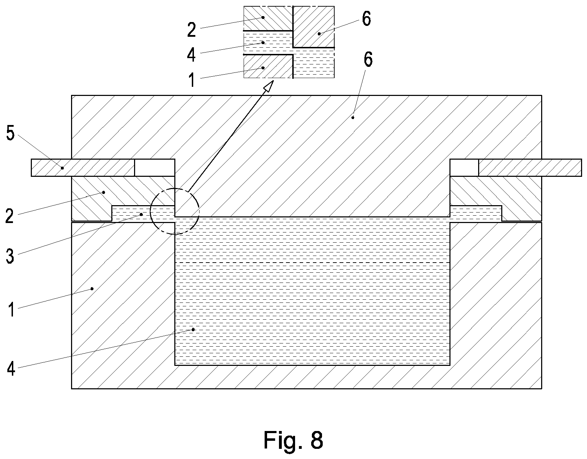

In der Fig. 4 werden die Abstandshalter 5 dargestellt, die ein vollständiges Eintauchen der oberen Formhälfte 6 wie in der Fig. 5 dargestellt verhindern. In der Fig. 6 ist der erste Schließzustand des Werkzeugs dargestellt, bei dem der Formhohlraum im Wesentlichen die Geometrie des Formteils aufweist. Der so erhältliche erste Zustand erlaubt ein freies Hindurchtreten des schäumbaren Materials 4 bis in die Nut 3 hinein, wenn das Material, wie in der Fig. 7 dargestellt entsprechend aufschäumt. In Fig. 8 wird neben dem ausgeschäumten Formhohlraum ein Detailausschnitt des Bereichs der Nut 3 dargestellt.

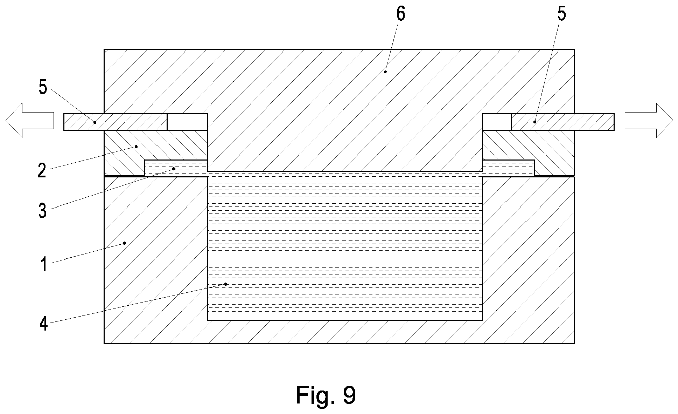

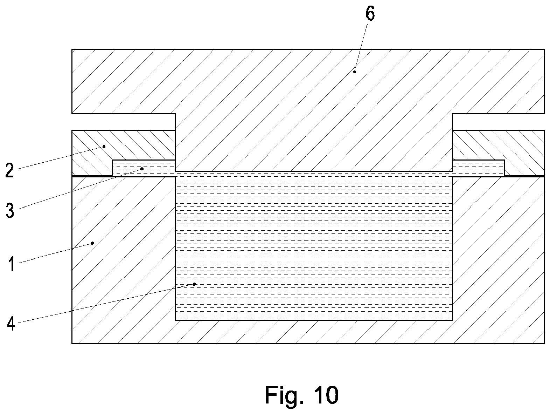

In der Fig. 9 ist der Formholraum sowie die Nut 3 vollständig mit dem geschäumten Material gefüllt. Nach dem Aushärten des geschäumten Materials werden die Abstandshalter 5, wie durch die Pfeile dargestellt entfernt um den Zustand gemäß der Fig. 10 zu erreichen.

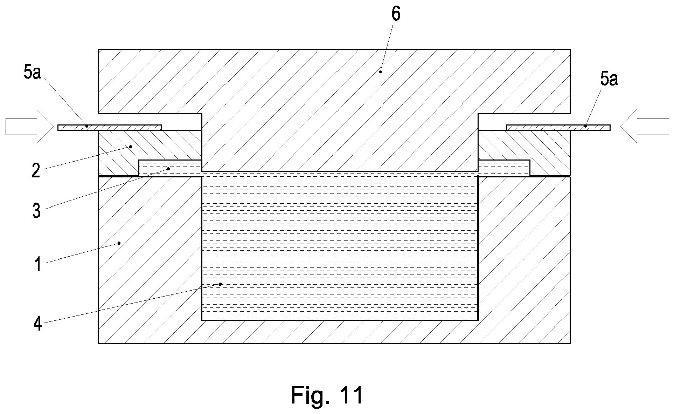

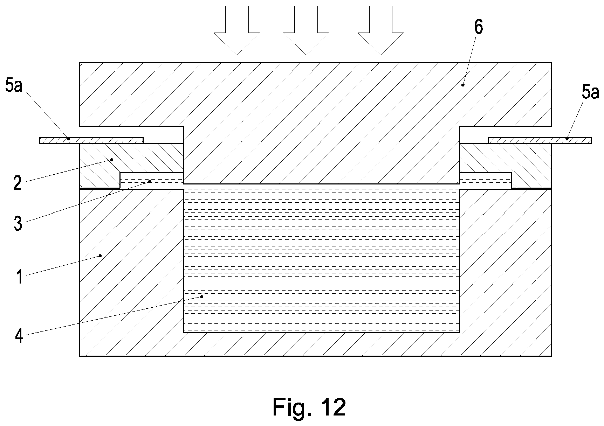

Gegebenenfalls durch Einlegen flacherer Abstandshalter 5a kann die obere Formhälfte 6 das geschäumte Material stauchen und gleichzeitig das in den Nut 3 befindliche geschäumte Material 4 durch Stanzen von dem in Formholraum befindlichen Material abtrennen. Diese Relativbewegung der oberen Formhälfte 6 ist in den Fig. 10, 11 und 12 dargestellt.

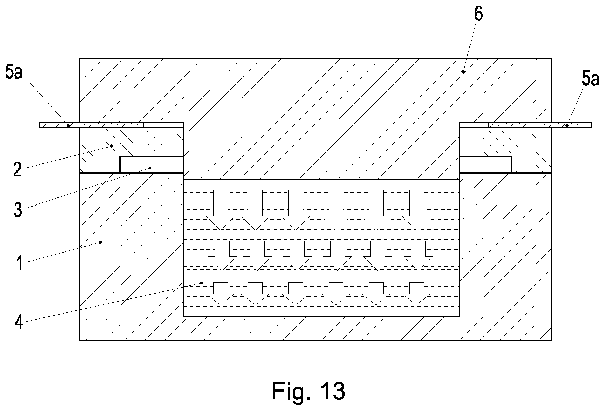

Die Endposition der oberen Formhälfte 6 ist in der Fig. 13 dargestellt. Das geschäumte Material 4 in der Nut 3 ist hier bereits in einem Schritt abgetrennt. Die Pfeile im Formholraum deuten an, dass der Formköper gestaucht ist. Alternativ ist es aber auch besonders bevorzugt, das Stanzen in mehreren Schritten durchzuführen. Hierzu werden entsprechend angepasste , insbesondere mechanisch hydraulisch oder pneumatisch bewegte bzw. geführte Formhälften 1,6 eingesetzt, die den Stanzhub ausüben.

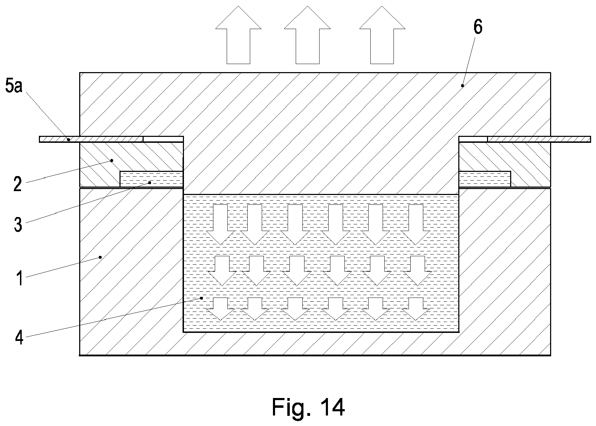

In der Fig. 14 wird durch die drei nach oben gerichteten Pfeile die Relativbewegung der oberen Formhälfte 6 angedeutet, dass die Form hier geöffnet wird.

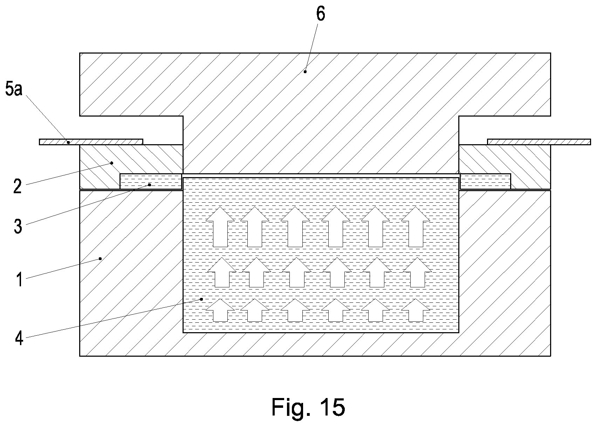

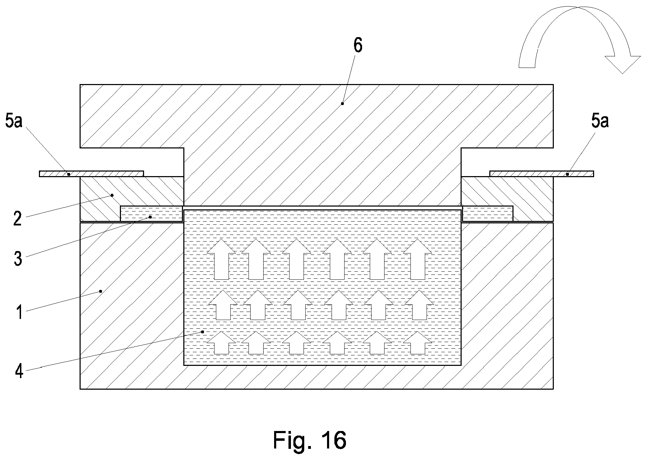

In den Fig. 15 und 16 wird der entspannte Formkörper 4 dargestellt.

Setzt man die Relativbewegung der oberen Formhälfte 6 fort, so wird der vollständig entspannte Formkörper 4 aus dem aufgeschäumten Material dargestellt.

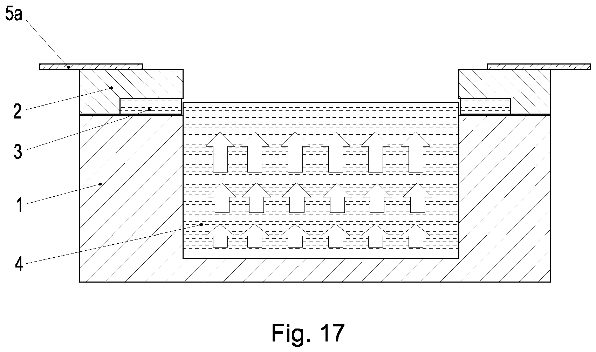

In der Fig. 17 ist die obere Formhälfte 6 vollständig entfernt.

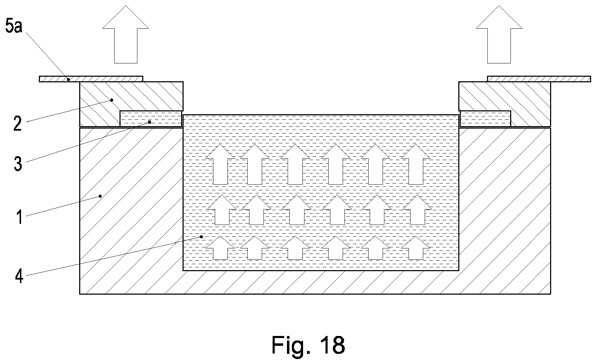

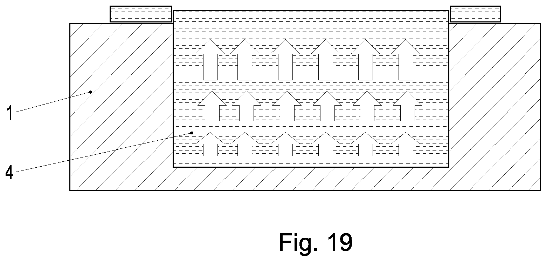

In den Fig. 18 und 19 ist die Relativbewegung des Aufsatzes 2 dargestellt, der hier von der unteren Formhälfte 1 getrennt wird.

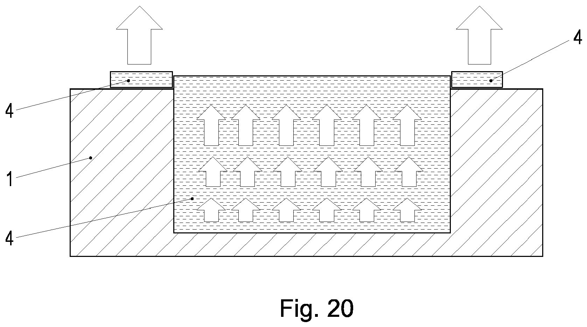

In der Fig. 19 ist die untere Formhälfte 1 dargestellt, die von dem Aufsatz 2 getrennt ist. Im nächsten Schritt Fig. 20 kann dann das in der ursprünglichen Nut 3 befindliche schäumbare Material 4 entfernt werden, wie durch die beiden Pfeile dargestellt.

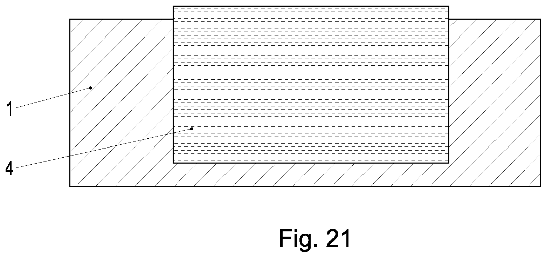

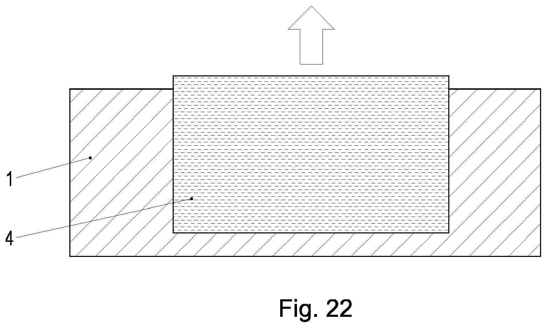

In der Fig. 21 wird das in der unteren Formhälfte 1 befindliche geschäumte Material 4, das heißt der Formköper 4 dargestellt, der gemäß Fig. 22 dargestellt durch den Pfeil aus der unteren Formhälfte 1 entfernt werden kann.

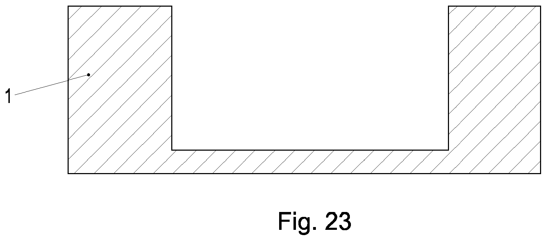

In der Fig. 23 wird dann die leere untere Formhälfte 1 dargestellt, die in einem neuen Zyklus wieder mit schäumbaren Material 4 gefüllt werden kann.

Es versteht sich von selbst, dass die inneren Flächen des Schäumstanzwerkzeugs zur Herstellung von Schaumteilen 4 möglichst mit entsprechendem Formtrennmittel versehen sind, um ein einfaches Entnehmen des Formkörpers 4 zu gewährleisten.

Zur Herstellung von Integralschaumbauteilen 4 ist es darüber hinaus auch bevorzugt, die inneren Flächen des Werkzeuges selektiv temperierbar auszugestalten, um hier den entsprechenden Dichteverlauf eines Integralschaums zu gewährleisten.

Eine weitere Ausführungsform der vorliegenden Erfindung umfasst weiterhin ein Verfahren zur Herstellung von Schaumteilen aus Integralschaum in einem Schäumstanzwerkzeug mit einer unteren Formhälfte 1 und einem randumlaufenden Aufsatz 2, der mit der unteren Formhälfte 1 eine zum Formhohlraum gerichtete Nut 3 bildet und einer oberen Formhälfte 6, wobei man schäumfähiges Material 4 in die untere Formhälfte 1 gibt, das Werkzeug unter Bildung einer Nut 3 zwischen der unteren Formhälfte 1 und dem Aufsatz 2 schließt, das schaumfähige Material 4 unter Füllung des Formhohlraum und der Nut 3 schäumt, nach dem Aufschäumen, und Aushärten des Schaums 4 durch Entfernen der Abstandshalter 5 und tieferes Eintauchen der oberen Formhälfte 6 in den Formhohlraum in der Nut 3 befindlichen Schaum in einem oder mehreren Schritten durch Stanzen entfernt, das Werkzeug vollständig öffnet und das Schaumteil 4 entnimmt.

Prinzipiell ist die Verwendung beliebiger schaumfähiger Materialien 4 im Sinne der vorliegenden Erfindung geeignet. Besonders bevorzugt im Sinne der vorliegenden Erfindung wird hier ein Polyurethanreaktionsgemisch als schaumfähiges Material eingesetzt.

## Patentansprüche

1. Schäumstanzwerkzeug **mit Abstandshaltern** (5,5a) zur Herstellung von Schaumteilen (4) aus Integralschaum mit einer unteren Formhälfte (1) und einem an seiner Oberseite befindlichen randumlaufenden Aufsatz (2), der mit der unteren Formhälfte (1) eine zum Formhohlraum gerichtete Nut (3) bildet und einer oberen Formhälfte (6), wobei die obere Formhälfte (6) in einem ersten geschlossenen Zustand bedingt durch Abstandshalter (5) nur soweit in den Formhohlraum eintaucht, dass die Nut (3) aufschäumendes Material (4) aufnehmen kann, und die obere Formhälfte (6) in einem zweiten geschlossenen Zustand nach Entfernen der Abstandshalter (5) und gegebenenfalls Ersetzen derselben durch flachere Abstandshalter (5a) tiefer in den Formhohlraum eindringt und auf dem Weg in diesen Zustand in der Nut (3) befindliches Material (4) in wenigstens einem Schritt durch Stanzen entfernen kann.

2. Werkzeug nach Anspruch 1, **dadurch gekennzeichnet, dass** die untere Formhälfte (1) und die obere Formhälfte (6) jeweils für sich unabhängig von der korrespondierenden Formhälfte (1,6) temperierbar ist.

3. Werkzeug nach Anspruch 1 oder 2, **dadurch gekennzeichnet, dass** die Formhälfte (1) und/oder (6) mechanisch, pneumatisch und/oder hydraulisch geführt ist.

4. Verfahren zur Herstellung von Schaumteilen aus Integralschaum in einem Schäumstanzwerkzeug mit einer unteren Formhälfte (1) und einem randumlaufenden Aufsatz (2), der mit der unteren Formhälfte (1) eine zum Formhohlraum gerichtete Nut (3) bildet und einer oberen Formhälfte (6), wobei man schäumfähiges Material (4) in die untere Formhälfte (1) gibt, das Werkzeug unter Bildung einer Nut (3) zwischen der unteren Formhälfte (1) und dem Aufsatz (2) schließt, das schaumfähige Material (4) unter Füllung des Formhohlraum und der Nut (3) schäumt, nach dem Aufschäumen, und Aushärten des Schaums (4) durch Entfernen der Abstandshalter (5) und tieferes Eintauchen der oberen Formhälfte (6) in den Formhohlraum in der Nut (3) befindlichen Schaum in wenigstens einem Schritt durch Stanzen entfernt,
- das Werkzeug vollständig öffnet und
- das Schaumteil (4) entnimmt.

5. Verfahren nach Anspruch 4, **dadurch gekennzeichnet, dass** man ein Polyurethanreaktionsgemisch als schaumfähiges Material (4) einsetzt.

6. Verfahren nach Anspruch 4 oder 5, **dadurch gekennzeichnet, dass** die untere (1) und/oder obere (6) Formhälfte mechanisch, pneumatisch und/oder hydraulisch geführt wird.

## Claims

1. A foaming and punching tool with spacers (5, 5a) for producing foamed products (4) made of integral foam, comprising a lower mold (1) and a circumferential top piece (2) present at the upper side thereof, which forms a groove (3) together with said lower mold (1) that faces the mold cavity, and an upper mold (6),
wherein in a first closed condition said upper mold (6), due to spacers (5), penetrates into the mold cavity only to such an extent that the groove (3) can receive foaming material (4), and
in a second closed condition said upper mold (6) penetrates deeper into the mold cavity after said spacers (5) have been removed and optionally replaced by thinner spacers (5a), and, on its way into the latter condition, can remove material (4) present in the groove (3) by punching in at least one step.

2. The tool according to claim 1, **characterized in that** said lower mold (1) and said upper mold (6) can be temperature-controlled each independently of the corresponding mold (1, 6).

3. The tool according to claim 1 or 2, **characterized in that** said molds (1) and/or (6) are directed mechanically, pneumatically and/or hydraulically.

4. A method for producing foamed products made of integral foam in a foaming and punching tool comprising a lower mold (1) and a circumferential top piece (2), which forms a groove (3) together with said lower mold (1) that faces the mold cavity, and an upper mold (6), wherein
foamable material (4) is added into the lower mold (1),
the mold is closed to form a groove (3) between the lower mold (1) and the top piece (2),
the foamable material (4) foams to fill the mold cavity and the groove (3),
and the foam present in the groove (3) is removed by punching in at least one step after the foaming and curing of the foam (4) by removing the spacers (5) and allowing the upper mold (6) to penetrate deeper into the mold cavity,
the mold is opened completely, and
the foam part (4) is removed.

5. The method according to claim 4, **characterized in that** a polyurethane reaction mixture is employed as said foamable material (4).

6. The method according to claim 4 or 5, **characterized in that** lower mold (1) and/or upper mold (6) are directed mechanically, pneumatically and/or hydraulically.

## Revendications

1. Outil de moussage-poinçonnage avec des écarteurs (5, 5a) pour la production de produits moussés (4) en mousse intégrale, comprenant un moule inférieur (1) et une pièce supérieure circonférentielle (2) se situant sur son côté supérieur, qui forme, ensemble avec ledit moule inférieur (1), une rainure (3) en face de la cavité de moule, et un moule supérieur (6),
dans lequel, dans une première condition fermée, ledit moule supérieur (6), à cause des écarteurs (5), pénètre dans la cavité de moule seulement à tel point que ladite rainure (3) peut recevoir du matériau moussant (4), et
dans une deuxième condition fermée, ledit moule supérieur (6) pénètre plus profondément dans la cavité de moule après que lesdits écarteurs (5) ont été éliminés et éventuellement remplacés par des écarteurs plus minces (5a), et peut éliminer du matériau (4) se situant dans la rainure (3) par poinçonnage dans au moins une étape sur la voie dans cette condition.

2. Outil selon la revendication 1, **caractérisé en ce que** ledit moule inférieur (1) et ledit moule supérieur (6) peuvent être mis à température chacun indépendamment du moule correspondant (1, 6).

3. Outil selon la revendication 1 ou 2, **caractérisé en ce que** lesdits moules (1) et/ou (6) sont gérés mécaniquement, pneumatiquement et/ou hydrauliquement.

4. Procédé pour la production de produits moussés en mousse intégrale dans un outil de moussage-poinçonnage comprenant un moule inférieur (1) et une pièce supérieure circonférentielle (2) qui forme, ensemble avec ledit moule inférieur (1), une rainure (3) en face de la cavité de moule, et un moule supérieur (6), dans lequel
du matériau moussable (4) est ajouté dans le moule inférieur (1),
le moule est fermé pour former une rainure (3) entre ledit moule inférieur (1) et ladite pièce supérieure (2),
ledit matériau moussable (4) mousse pour remplir la cavité de moule et la rainure (3),
et la mousse se situant dans la rainure (3) est éliminée par poinçonnage dans au moins une étape après le moussage et la réticulation de la mousse (4) en éliminant les écarteurs (5) et permettre le moule supérieur (6) de pénétrer plus profondément dans la cavité de moule,
le moule est ouvert complètement, et
le produit moussé (4) est retiré.

5. Procédé selon la revendication 4, **caractérisé en ce qu'**un mélange réactionnel à polyuréthane est utilisé comme ledit matériau moussable (4).

6. Procédé selon la revendication 4 ou 5, **caractérisé en ce que** le moule inférieur (1) et/ou le moule supérieur (6) sont gérés mécaniquement, pneumatiquement et/ou hydrauliquement.
